# EUROPÄISCHE PATENTSCHRIFT

(11) **EP 2 930 097 B1**
(45) Veröffentlichungstag und Bekanntmachung des Hinweises auf die Patenterteilung: **04.11.2020**
(21) Anmeldenummer: 15160558.1
(22) Anmeldetag: 24.03.2015
(51) Int. Cl.: B62M 6/70, B62M 11/04, B62M 11/06, B62M 6/45

(54) **ANTRIEB FÜR EIN ELEKTROFAHRRAD**
DRIVE FOR AN ELECTRIC BICYCLE
ENTRAÎNEMENT POUR UN VÉLO ÉLECTRIQUE

(30) Priorität: 10.04.2014 DE 202014101700 U
(43) Veröffentlichungstag der Anmeldung: 14.10.2015
(73) Patentinhaber: Elektromotorenwerk Grünhain GmbH, 08344 Grünhain-Beierfeld (DE)
(72) Erfinder: Rauchfuß, Volkmar, 01728 Bannewitz (DE)
(74) Vertreter: Manitz Finsterwald Patent- und Rechtsanwaltspartnerschaft mbB

(56) Entgegenhaltungen:
- EP-A1- 2 669 549
- EP-A2- 1 129 933
- WO-A1-2011/061048
- WO-A1-2012/066124
- CN-A- 103 195 878
- DE-A1-102012 217 775
- FR-A1- 2 994 936
- JP-A- H11 240 481
- US-A1- 2013 095 971

## Beschreibung

Die vorliegende Erfindung betrifft einen Antrieb für ein Lastenfahrrad mit einem Elektromotor und einem schaltbaren Getriebe.

Antriebe für Elektrofahrräder sind aus dem Stand der Technik in zahlreichen Ausführungsformen bekannt (z.B. WO 2012/066124 A1). Derartige bekannte Antriebe weisen häufig komplexe Getriebe und/oder aufwendige Steuerungen zur automatischen Drehmomentunterstützung durch den Elektromotor auf. Dies wiederum bedingt eine aufwendige Sensorik zur Drehmomenterfassung und hohe Entwicklungs- und Herstellungskosten. Dokument WO 2012/066124 offenbart den Oberbegriff des Anspruchs 1.

Es ist die Aufgabe der vorliegenden Erfindung, einen Antrieb für ein Lastenfahrrad zu schaffen, der robust ist, kostengünstig herstellbar ist und mit dem eine optimierte Kraftunterstützung erfolgen kann.

Die Lösung dieser Aufgabe erfolgt durch die Merkmale des Anspruchs 1. Erfindungsgemäß erfolgt die Kraftunterstützung durch den Elektromotor durch ein einziges Drehmoment übertragendes Element wie einen Riemen oder eine Kette, wobei jedoch der Elektromotor nicht auf die Tretkurbelwelle aufgesetzt ist. Vielmehr erfolgt die Drehmomentübertragung zwischen Elektromotor und Abtriebswelle über eine sehr einfache drehbare Verbindung, so dass ein handelsüblicher Motor eingesetzt werden kann und für den Verwendungszweck nicht speziell adaptiert oder modifiziert werden muss.

Nach der Erfindung ist in dem Gehäuse auch eine Steuerelektronik des Elektromotors untergebracht. Hierdurch ist eine äußerst kompakte Anordnung geschaffen, in der die Steuerelektronik geschützt in dem Gehäuse untergebracht ist.

Eine konstruktiv robuste und dennoch kompakte Lösung ergibt sich, da der Antrieb insgesamt vier parallel beabstandete Wellen enthält, nämlich die Tretkurbelwelle, die Abtriebswelle, eine Motorwelle und eine Getriebewelle. Die kompakte Bauweise ist dadurch optimiert, dass auf einer Seite der Tretkurbelwelle der Elektromotor und auf der anderen Seite der Tretkurbelwelle das Getriebe und die Abtriebswelle angeordnet sind. Da ein Drehmomentübertragungsglied zwischen Elektromotor und Abtriebswelle die Tretkurbelwelle umläuft, ist eine eine kompakte Bauweise gegeben.

Erfindungsgemäß erfolgt die Ansteuerung des Elektromotors im Umrichter durch eine feldorientierte Regelung (FOC). Hierzu ist zwar ein erhöhter Programmieraufwand erforderlich. Jedoch kann eine feldorientierte Regelung eine bessere Kraftunterstützung gewährleisten, was insbesondere bei Lastenfahrrädern vorteilhaft ist, deren Gesamtgewicht mit Last über 300 kg betragen kann.

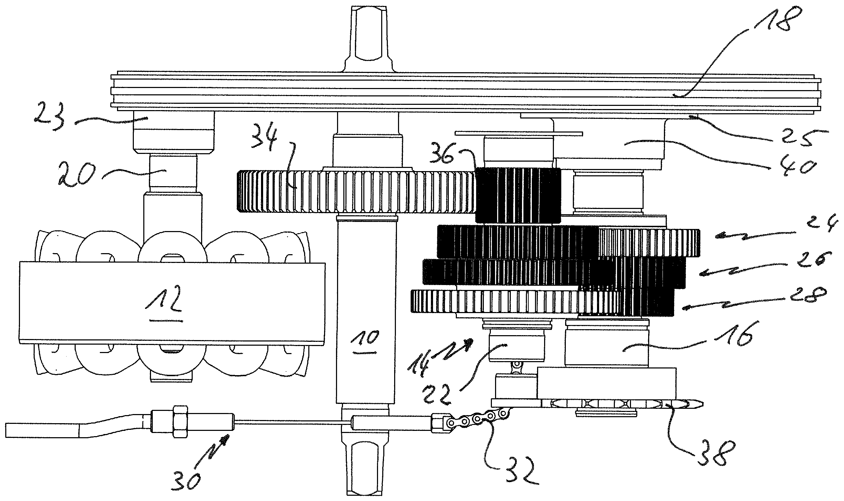

Vorteilhafte Ausführungsformen der Erfindung sind in der Beschreibung, der Zeichnung sowie den Unteransprüchen beschrieben.

Nach einer ersten vorteilhaften Ausführungsform kann das schaltbare Getriebe ein Ziehkeilgetriebe sein. Ein solches in das gemeinsame Gehäuse integrierte Getriebe kann hohe Drehmomente übertragen und für eine robuste Anwendung und Haltbarkeit optimiert werden. Im Gegensatz zu bekannten Naben- oder Kettenschaltungen eignet sich ein solches Getriebe besonders gut für eine Kraftunterstützung durch einen Elektromotor.

Es ist vorteilhaft, wenn das schaltbare Getriebe ein Handschaltgetriebe ist, da in diesem Fall keine aufwendige Steuerung erforderlich ist, um das Getriebe zu betätigen.

Nach einer weiteren vorteilhaften Ausführungsform kann die Drehverbindung zwischen Elektromotor und Abtriebswelle eine feste Untersetzung aufweisen, beispielsweise durch Verwendung von unterschiedlich großen Zahn- oder Antriebsrädern. Auf diese Weise lässt sich die Motordrehzahl auf sehr einfache Weise robust und kostengünstig reduzieren.

Für eine besonders kostengünstige Ausbildung des Antriebs kann es vorteilhaft sein, wenn eine Steuerung des Elektromotors durch ein manuell betätigbares Stellglied erfolgt. Im Gegensatz zu Antrieben mit einer automatischen Kraftunterstützung, bei der die Drehmomenterfassung üblicherweise umfangreiche Sensorik erfordert, kann ein manuell betätigbares Stellglied, wie beispielsweise ein mittels eines Griffes betätigbarer Bowdenzug, sehr kostengünstig umgesetzt werden.

Nach einer weiteren vorteilhaften Ausführungsform kann in einer Steuerelektronik des Elektromotors zumindest eine Kennlinie vorgegeben sein, die das von dem Elektromotor erzeugte Drehmoment in Abhängigkeit von der Fahrgeschwindigkeit vorgibt. Auf diese Weise kann mit einer technisch sehr einfachen Realisierung eine Motorunterstützung des Antriebs erreicht werden, ohne dass eine komplizierte Regelung oder aufwendige Sensorik erforderlich wären.

Es kann weiterhin vorteilhaft sein, wenn eine Regelung des Elektromotors ausschließlich in Abhängigkeit von der Drehzahl des Motors und/oder der Fahrgeschwindigkeit erfolgt. In diesem Fall sind nämlich lediglich zwei einfache Sensoren erforderlich, nämlich ein Drehzahlmesser an der Tretkurbelwelle und ein Lagesensor an der Motorwelle, mit dem die jeweilige Winkellage der Motorwelle ermittelt werden kann.

Nachfolgend wird die vorliegende Erfindung rein beispielhaft anhand einer vorteilhaften Ausführungsform und unter Bezugnahme auf die Zeichnung beschrieben.

Die Figur zeigt eine schematische Ansicht eines Antriebs für ein Elektrofahrrad.

Der in der Figur dargestellte Antrieb für ein Elektrofahrrad umfasst eine Tretkurbelwelle 10, einen Elektromotor 12 und ein schaltbares Getriebe 14 sowie eine von der Tretkurbelwelle 10 getrennte Abtriebswelle 16, die in einem (nicht dargestellten) gemeinsamen Gehäuse angeordnet sind.

Wie die Figur verdeutlicht, ist der Elektromotor 12 sozusagen als Direktantrieb mit der Abtriebswelle 16 drehbar verbunden, nämlich über ein einziges Drehmomentübertragungselement, das beim dargestellten Ausführungsbeispiel als Doppelkette 18 ausgebildet ist. Die Doppelkette 18 umfasst somit zwei nebeneinander umlaufende Ketten, welche ein auf einer Welle 20 des Elektromotors 12 angebrachtes Zahnrad 23 und ein auf der Abtriebswelle 16 angebrachtes Zahnrad 25 drehbar miteinander verbinden. Hierbei besitzt das auf der Motorwelle 20 angebrachte Zahnrad einen kleineren Durchmesser wie das auf der Abtriebswelle 16 angeordnete Zahnrad, so dass die Drehverbindung 18 zwischen Elektromotor 12 und Antriebswelle 16 eine einzige feste Untersetzung aufweist die nur aus zwei Rädern mit unterschiedlichem Durchmesser besteht. Wie die Figur ferner verdeutlicht, umläuft die Doppelkette 18 zwischen Elektromotor 12 und Abtriebswelle 16 die Tretkurbelwelle 10, so dass sich die Tretkurbelwelle 10 durch die umlaufende Doppelkette 18 hindurch erstreckt.

Das schaltbare Getriebe 14 ist bei der dargestellten Ausführungsform als Handschaltgetriebe und insbesondere als Ziehkeilgetriebe ausgebildet. Hierbei sind auf einer Getriebewelle 22 des Getriebes 14 drei unterschiedlich große Zahnräder angeordnet, wobei jeweils ein Zahnrad mit einem auf der Abtriebswelle 16 angeordneten Zahnrad kämmt, so dass insgesamt drei Zahnradpaare 24, 26 und 28 gebildet sind. Durch einen im Inneren der Getriebewelle 22 angeordneten Ziehkeil kann auf bekannte Weise jeweils eine Kraftübertragung über eines der Zahnradpaare 24, 26 und 28 erfolgen, wobei eine Betätigung des Ziehkeils über einen Bowdenzug 30 erfolgt, der über eine Gliederkette 32 an dem Ziehkeil (nicht dargestellt) befestigt ist.

Für einen Antrieb des Getriebes 14 ist auf der Drehkurbelwelle 10 ein Zahnrad 34 angeordnet, das mit einem Zahnrad 36 auf der Getriebewelle 22 kämmt. Somit kann durch Drehen der Tretkurbelwelle 10 Drehmoment auf die Getriebewelle 22 übertragen werden, die wiederum ihre Drehung über das Ziehkeilgetriebe 14 auf die Abtriebswelle 16 überträgt. Von dort wird das Drehmoment schließlich über ein Zahnrad 38 auf ein Antriebsrad des Fahrrads übertragen.

Wie die Figur weiterhin verdeutlicht, ist auf einer Seite der Drehkurbelwelle 10 (in der Figur auf der linken Seite) der Elektromotor 12 angeordnet und auf der anderen Seite der Tretkurbelwelle 10 sind das Getriebe 14 und die Antriebswelle 16 angeordnet. Somit besteht der Antrieb aus insgesamt vier parallel beabstandeten Wellen, nämlich (von links nach rechts) aus der Motorwelle 20, der Tretkurbelwelle 10, der Getriebewelle 22 und der Abtriebswelle 16. Für einen störungsfreien Betrieb ist weiterhin zwischen dem Elektromotor 12 und der Abtriebswelle 16 und zwischen der Tretkurbelwelle 10 und der Abtriebswelle 16 jeweils ein Freilauf vorgesehen, wobei ein Freilauf 40 zwischen dem Zahnrad 25 und der Abtriebswelle 16 und ein weiterer Freilauf zwischen der Abtriebswelle 16 und den auf dieser angeordneten Zahnrädern des Getriebes 14 angeordnet ist.

Für eine Ansteuerung des Elektromotors ist in dem (nicht dargestellten) Gehäuse auch eine Steuerelektronik (nicht dargestellt) des Elektromotors 12 untergebracht, wobei eine Steuerung des Elektromotors durch ein manuell betätigbares Stellglied erfolgt, das eine vom Fahrer gewünschte Motorunterstützung an die Steuerelektronik weitergibt. Ein solches Stellglied kann beispielsweise ein bekannter "Gasgriff' sein, der eine Drehbewegung des Fahrers über einen Bowdenzug oder über eine andere Sensorik an die Steuerelektronik weitergibt.

In der Steuerelektronik ist bei dem beschriebenen Ausführungsbeispiel zumindest eine Kennlinie vorgegeben, die das vom Elektromotor 12 erzeugte Drehmoment in Abhängigkeit von der von einem Sensor gemessenen Fahrgeschwindigkeit vorgibt. Beispielsweise kann die Vorgabe derart sein, dass eine volle Motorunterstützung erst ab einer bestimmten Mindestgeschwindigkeit erfolgt. Weiterhin kann in der Steuerelektronik vorgesehen werden, dass trotz Anforderung einer Unterstützung durch den Fahrer abhängig von Geschwindigkeit und/oder Drehzahl nur eine intermittierende Motorunterstützung erfolgt.

Erfindungsgemäß erfolgt eine Ansteuerung bzw. Regelung des Elektromotors, der beim beschriebenen Ausführungsbeispiel ein permanenterregter, Umrichter gespeister Elektromotor ist, ausschließlich in Abhängigkeit von der Drehzahl des Motors und/oder der Fahrgeschwindigkeit, wodurch eine einfache und preisgünstige Steuerung erzielt werden kann.

## Patentansprüche

1. Antrieb für ein Lastenfahrrad, umfassend
a) einen Elektromotor (12) und ein schaltbares Getriebe (14),
b) insgesamt vier parallel beabstandete Wellen, nämlich eine Tretkurbelwelle (10), eine von der Tretkurbelwelle (10) getrennte Abtriebswelle (16), eine Motorwelle (20) und eine Getriebewelle (22), wobei
c) die Tretkurbelwelle (10) mit der Abtriebswelle (16) über das schaltbare Getriebe (14) drehbar verbunden ist, und **dadurch gekennzeichnet, dass** auf einer Seite der Tretkurbelwelle (10) der Elektromotor (12) und auf der anderen Seite der Tretkurbelwelle das Getriebe (14) und die Abtriebswelle (16) angeordnet sind, und
d) die Tretkurbelwelle (10), der Elektromotor (12), eine Steuerelektronik des Elektromotors, das schaltbare Getriebe (14) sowie die Abtriebswelle (16) in einem gemeinsamen Gehäuse angeordnet sind,
e) der Elektromotor (12) als Direktantrieb mit der Abtriebswelle (16) drehbar verbunden ist, nämlich über ein einziges Drehmomentübertragungselement (18) in Form einer Kette oder eines Riemens, insbesondere Doppelkette, die/der die Tretkurbelwelle (10) umläuft, und
f) der Elektromotor eine permanenterregte Umrichter gespeiste Maschine ist und die Ansteuerung des Elektromotors durch eine feldorientierte Regelung (FOC) erfolgt.

2. Antrieb nach Anspruch 1,
**dadurch gekennzeichnet, dass**
das Getriebe (14) ein Ziehkeilgetriebe ist.

3. Antrieb nach Anspruch 1 oder 2,
**dadurch gekennzeichnet, dass**
das Getriebe (14) ein Handschaltgetriebe ist.

4. Antrieb nach zumindest einem der vorstehenden Ansprüche, **dadurch gekennzeichnet, dass**
die Drehverbindung (18) zwischen Elektromotor (12) und Abtriebswelle (16) eine feste Untersetzung aufweist.

5. Antrieb nach Anspruch 4, **dadurch gekennzeichnet, dass**
die Drehverbindung (18) zwischen Elektromotor (12) und Abtriebswelle (16) außer der festen Untersetzung keine Getriebeelemente aufweist.

6. Antrieb nach zumindest einem der vorstehenden Ansprüche,
**dadurch gekennzeichnet, dass**
eine Steuerung des Elektromotors (12) durch ein manuell betätigbares Stellglied erfolgt.

7. Antrieb nach zumindest einem der vorstehenden Ansprüche, **dadurch gekennzeichnet, dass**
zwischen Tretkurbelwelle (10) und Elektromotor (12) und zwischen Tretkurbelwelle (10) und Abtriebswelle (16) jeweils ein Freilauf vorgesehen ist.

8. Antrieb nach zumindest einem der vorstehenden Ansprüche, **dadurch gekennzeichnet, dass**
in der Steuerelektronik des Elektromotors (12) zumindest eine Kennlinie vorgegeben ist, welche das erzeugte Drehmoment in Abhängigkeit von der Fahrgeschwindigkeit vorgibt.

9. Antrieb nach zumindest einem der vorstehenden Ansprüche, **dadurch gekennzeichnet, dass**
eine Steuerung des Elektromotors (12) ausschließlich in Abhängigkeit von der Drehzahl des Motors und/oder der Fahrgeschwindigkeit erfolgt.

## Claims

1. A drive for a cargo bicycle, comprising
a) an electric motor (12) and a shiftable gear (14); and
b) a total of four shafts spaced apart in parallel, namely a pedal crankshaft (10), an output shaft (16) separate from the pedal crankshaft (10), a motor shaft (20) and a gear shaft (22), wherein
c) the pedal crankshaft (10) is rotatably connected to the output shaft (16) via the shiftable gear (14), and **characterized in that** the electric motor (12) is arranged on one side of the pedal crankshaft (10) and the gear (14) and the drive shaft (16) are arranged on the other side of the pedal crankshaft (10), and
d) the pedal crankshaft (10), the electric motor (12), control electronics of the electric motor, the shiftable gear (14) and the output shaft (16) are arranged in a common housing,
e) the electric motor (12) is rotatably connected as a direct drive to the output shaft (16), namely via a single torque transmission element (18) in the form of a chain or of a belt, in particular of a double chain, which runs around the pedal crankshaft (10), and
f) the electric motor is a permanently excited inverter-fed machine and the control of the electric motor takes place by a field-oriented control (FOC).

2. A drive in accordance with claim 1,
**characterized in that**
the gear (14) is a draw-key transmission.

3. A drive in accordance with claim 1 or claim 2,
**characterized in that**
the gear (14) is a manual transmission.

4. A drive in accordance with at least one of the preceding claims,
**characterized in that**
the rotary connection (18) between the electric motor (12) and the output shaft (16) has a fixed reduction.

5. A drive in accordance with claim 4,
**characterized in that**
the rotary connection (18) between the electric motor (12) and the output shaft (16) does not have any transmission elements apart from the fixed reduction.

6. A drive in accordance with at least one of the preceding claims,
**characterized in that**
a control of the electric motor (12) takes place by a manually actuable control element.

7. A drive in accordance with at least one of the preceding claims,
**characterized in that**
a respective freewheel is provided between the pedal crankshaft (10) and the electric motor (12) and between the pedal crankshaft (10) and the output shaft (16).

8. A drive in accordance with at least one of the preceding claims,
**characterized in that**
at least one characteristic curve is predefined in the control electronics of the electric motor (12) and predefines the generated torque in dependence on the travel speed.

9. A drive in accordance with at least one of the preceding claims,
**characterized in that**
a control of the electric motor (12) takes place solely in dependence on the rotational speed of the motor and/or on the travel speed.

## Revendications

1. Entraînement pour une bicyclette de transport, comprenant
a) un moteur électrique (12) et un engrenage commutable (14),
b) au total quatre arbres espacés parallèlement, à savoir un arbre de pédalier (10), un arbre de sortie (16) séparé de l'arbre de pédalier (10), un arbre de moteur (20) et un arbre de transmission (22),
c) l'arbre de pédalier (10) étant relié de façon mobile en rotation à l'arbre de sortie (16) par l'intermédiaire de l'engrenage commutable (14),
**caractérisé en ce que**
le moteur électrique (12) est disposé sur un côté de l'arbre de pédalier (10), et l'engrenage (14) et l'arbre de sortie (16) sont disposés sur l'autre côté de l'arbre de pédalier, et
d) l'arbre de pédalier (10), le moteur électrique (12), une unité électronique de commande du moteur électrique, l'engrenage commutable (14) ainsi que l'arbre de sortie (16) dans disposés dans un boîtier commun,
e) le moteur électrique (12) en tant qu'entraînement direct est relié de façon mobile en rotation à l'arbre de sortie (16), à savoir par l'intermédiaire d'un seul élément de transmission de couple (18) sous la forme d'une chaîne ou d'une courroie, en particulier d'une chaîne double qui tourne autour de l'arbre de pédalier (10),
f) le moteur électrique est une machine alimentée par un convertisseur à excitation permanente, et le pilotage du moteur électrique s'effectue par une commande à champ orienté (FOC).

2. Entraînement selon la revendication 1,
**caractérisé en ce que**
l'engrenage (14) est un engrenage à clavette.

3. Entraînement selon la revendication 1 ou 2,
**caractérisé en ce que**
l'engrenage (14) est un engrenage de commutation manuelle.

4. Entraînement selon l'une au moins des revendications précédentes,
**caractérisé en ce que**
la liaison en rotation (18) entre le moteur électrique (12) et l'arbre de sortie (16) présente une démultiplication fixe.

5. Entraînement selon la revendication 4,
**caractérisé en ce que**
la liaison en rotation (18) entre le moteur électrique (12) et l'arbre de sortie (16) ne comporte pas d'éléments de transmission, exception faite de la démultiplication fixe.

6. Entraînement selon l'une au moins des revendications précédentes,
**caractérisé en ce que**
le moteur électrique (12) est commandé par un actionneur à commande manuelle.

7. Entraînement selon l'une au moins des revendications précédentes,
**caractérisé en ce que**
une roue libre respective est prévue entre l'arbre de pédalier (10) et le moteur électrique (12) et entre l'arbre de pédalier (10) et l'arbre de sortie (16).

8. Entraînement selon l'une au moins des revendications précédentes,
**caractérisé en ce que**
au moins une courbe caractéristique est prédéfinie dans l'unité électronique de commande du moteur électrique (12) et prédéfinit le couple généré en fonction de la vitesse de déplacement.

9. Entraînement selon l'une au moins des revendications précédentes,
**caractérisé en ce que**
le moteur électrique (12) est commandé exclusivement en fonction de la vitesse de rotation du moteur et/ou de la vitesse de déplacement.
